# DEMANDE DE BREVET EUROPEEN

(11) **EP 1 847 314 A1**
(43) Date de publication de la demande: **24.10.2007**
(21) Numéro de dépôt: 06008351.6
(22) Date de dépôt: 21.04.2006
(51) Int. Cl.: B01J 8/36, B01J 8/38, C08F 10/00, B01J 8/18

(54) **Lit fluidisé rotatif**

(71) Demandeur: TOTAL PETROCHEMICALS RESEARCH FELUY, 7181 Seneffe (Feluy) (BE)
(72) Inventeur: de Broqueville, Axel, 1390 Grez-Doiceau (BE)
(74) Mandataire: Leyder, Francis

(57) **Abrégé**

Dispositif d'évacuation par une cheminée centrale rotative des fluides d'un lit fluidifié entraîné dans un mouvement de rotation dans le même sens par l'injection d'au moins une partie de ces fluides le long de la paroi circulaire d'une chambre fixe, et procédés de polymérisation catalytique, de séchage ou d'autres traitements de particules solides en suspension dans un lit fluidifié rotatif ou de craquage ou d'autres transformations catalytiques de fluides utilisant ce dispositif.

## Description

La présente invention se rapporte à un dispositif d'évacuation, au travers d'une cheminée centrale rotative, d'un ou plusieurs fluides, gazeux ou liquides, d'une chambre de réaction circulaire fixe le long de laquelle le ou les fluides sont injectés et font tourner un lit fluidifié en le traversant et à des procédés de polymérisation catalytique, de séchage, d'imprégnation, d'enrobage, de gazéification, de classification ou d'autres traitements de particules solides en suspension dans un lit fluidifié rotatif, ou de craquage, de déshydrogénation ou d'autres transformations catalytiques de fluides utilisant ce dispositif.

Pour obtenir un lit fluidifié dense, traversé par un flux de fluide, il faut que la pression exercée par le fluide sur les particules solides soit compensée par une force opposée qui est la pesanteur dans les lits fluidifiés classiques et la force centrifuge dans les lits fluidifiés rotatifs. Si les particules sont de très petites dimensions, par exemple les poudres du groupe C de la classification de Geldart, ou si la densité du fluide est proche de celle des particules solides, par exemple lorsque le fluide est un liquide, il faut que la force centrifuge soit très élevée et/ou que le flux de fluide traversant le lit fluidifié soit peu élevé.

Il est facile d'obtenir un lit fluidifié rotatif en le supportant sur un cylindre poreux rotatif, mais la non uniformité du lit fluidifié peut entraîner de fortes vibrations limitant la vitesse de rotation de ce dispositif et l'alimentation et l'évacuation de particules solides sans être entraînées par le fluide ne sont pas aisées, lorsque les particules solides sont très fines. Il est également possible d'obtenir un lit fluidifié rotatif dans une chambre circulaire fixe en injectant le fluide en couches minces le long de la paroi circulaire fixe et en l'évacuant par des ouvertures d'une cheminée centrale traversant la chambre circulaire. Un tel dispositif est décrit dans la demande_internationale de brevet WO-A-2005/099887 au nom de l'inventeur de la présente demande.

Dans ce dernier dispositif, pour augmenter la vitesse de rotation des particules solides il faut augmenter le débit de fluide et/ou diminuer l'épaisseur du lit fluidifié et/ou réduire la section des injecteurs de fluide pour augmenter la vitesse d'injection à débit constant. En pratique le frottement du fluide le long de la cheminée centrale fait qu'il est difficile d'obtenir une force centrifuge très élevée à proximité de la cheminée centrale avec un débit de fluide pas trop élevé, ce qui peut provoquer l'entraînement des particules solides les plus fines dans la cheminée centrale.

La présente invention comprend un dispositif d'alimentation et d'évacuation de particules solides dans une chambre de réaction circulaire fixe et un dispositif d'alimentation d'un ou plusieurs fluides, gazeux ou liquides, permettant d'injecter tout ou partie du ou des fluides le long de la paroi circulaire fixe de la chambre de réaction, sous la forme de jets de fluide, de préférence dans des directions formant un angle inférieur à 45° avec les plans tangents à la paroi circulaire, ou en une succession de couches minces longeant la paroi circulaire fixe, afin de faire tourner le long de la paroi circulaire fixe ce ou ces fluides qui entraînent les particules solides dans un mouvement de rotation dont la force centrifuge les pousse vers la paroi circulaire fixe le long de laquelle elles forment un lit fluidifié rotatif. Elle comprend en outre un dispositif d'évacuation de ce ou ces fluides comprenant un tube central rotatif, également appelé cheminée centrale rotative, traversant ou pénétrant longitudinalement à l'intérieur de la chambre de réaction circulaire fixe, ce tube central rotatif comprenant une ou plusieurs ouvertures permettant l'évacuation centrale de ce ou ces fluides et tournant dans le même sens et plus rapidement que la vitesse moyenne du ou des fluides et du lit fluidifié rotatif afin d'augmenter la force centrifuge qui repousse vers la paroi circulaire fixe les particules solides qui sont entraînées par le ou les fluides vers la cheminée centrale.

Ce tube central rotatif peut être équipé de palettes ou d'ailettes extérieures permettant d'accélérer la vitesse de rotation d'une couche de fluide qui l'entoure, qui a de préférence un diamètre inférieur à celui du lit fluidifié et qui ne contient pas ou peu de particules solides, ce qui permet une vitesse de rotation très élevée et donc de produire sur les particules solides les plus fines, entraînées par le ou les fluides à proximité de ce tube central rotatif, des forces centrifuges très élevées, de préférence supérieures à la force centripète moyenne exercée par ce ou ces fluides sur ces particules solides et ainsi de les repousser vers le lit fluidifié rotatif. Ceci permet d'obtenir des lits fluidifiés rotatifs composés de ou contenant des particules très fines et traversés par une grande quantité de fluides.

Dans la présente invention, les sections transversales de la chambre circulaire peuvent être des cercles, des polygones ou d'autres formes de courbures variables afin de faire varier la force centrifuge sur les particules solides qui tournent le long de cette surface, et la surface de ces sections transversales peut varier progressivement ou par palier afin de faire varier l'épaisseur du lit fluidifié.

Que le fluide soit injecté sous la forme de films minces ou de jets de fluide, si sa vitesse d'injection est très élevée, lorsque les particules solides qui longent la paroi circulaire entrent en contact avec le fluide, elles sont brutalement écartées de la paroi, pour s'en rapprocher ensuite sous l'effet de la force centrifuge. Les particules solides peuvent ainsi être soumises à des variations de pression et des vibrations rapides et intenses. Cette propriété est particulièrement intéressante lorsqu'il faut empêcher l'agglomération de micro particules sous l'effet des forces de cohésions et pour les particules solides collantes comme les élastomères ou les solides bitumineux. Les variations rapides de pressions permettent également d'améliorer les transferts de masse entre le fluide et les particules solides poreuses.

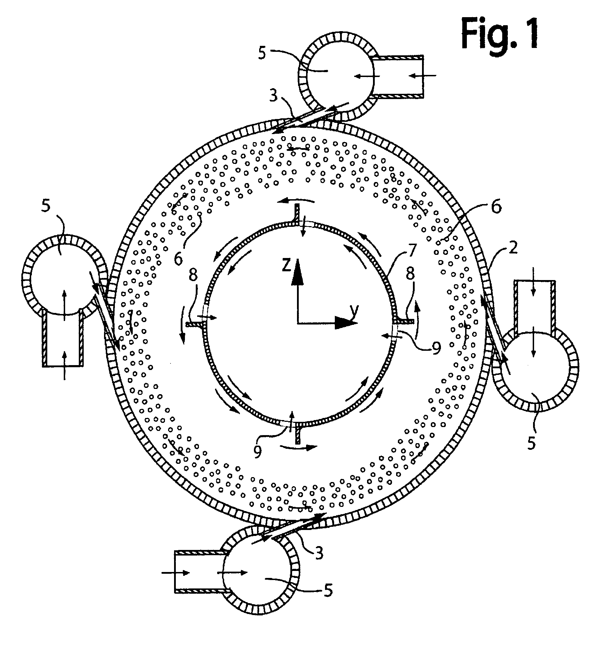

La FIGURE 1 montre la coupe transversale d'un exemple de cette invention comprenant la section de la paroi latérale circulaire fixe (2) traversée par des injecteurs de fluide (3), pouvant être par exemple des tubes généralement de petits diamètres ou des fentes longitudinales, alimentés en fluide par des tubes (5) fixés le long de la paroi (2) et permettant d'injecter un fluide le long de cette paroi (2) dans une direction transversale formant un angle inférieur à 45° avec cette paroi (2). Des particules solides (6) entraînées par le fluide tournent le long de la paroi (2) et forment ainsi un lit fluidifié rotatif.

La section d'un tube central rotatif (7) équipé de palettes, aubes ou ailettes, ci-après palettes (8), et d'ouvertures d'évacuation du fluide (9), tourne dans le même sens et plus rapidement que le lit de particules solides (6) afin d'accélérer le mouvement de rotation du fluide qui, ayant traversé le lit fluidifié, est aspiré par le tube (7) au travers de ses ouvertures (9). La force centrifuge produite par la rotation rapide du tube et de ses palettes, s'oppose à l'entraînement des particules solides (6) dans les ouvertures (9), ce qui permet de séparer les particules solides du fluide qui a traversé le lit fluidifié avant de l'évacuer. Les palettes (8) peuvent être profilées de manière aérodynamique, comme des ailettes de turbine, afin de minimiser la turbulence dans leur sillage.

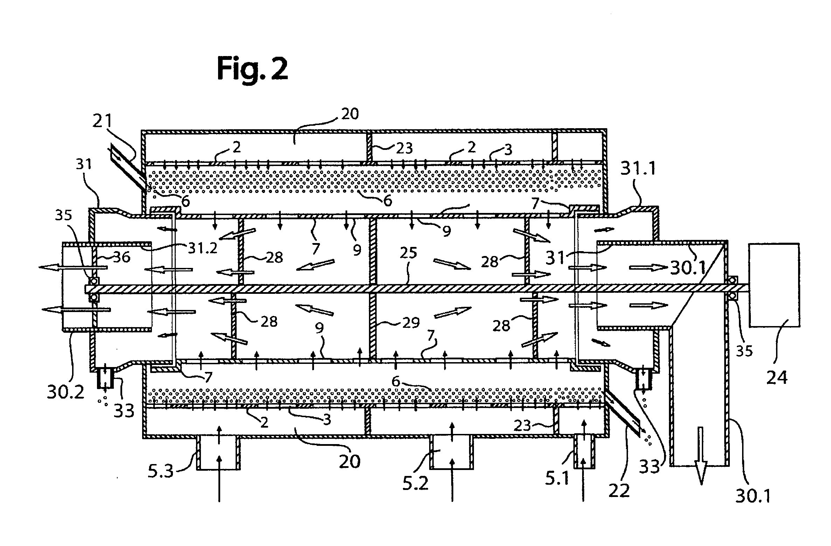

La FIGURE 2 montre la coupe longitudinale d'un exemple de l'invention comprenant la section de la paroi latérale circulaire fixe (2) entourée d'une chambre d'alimentation de fluides (20) alimentée en fluides par les tubes de (5.1) à (5.3). Des injecteurs de fluides symbolisés par les ouvertures (3) aménagées dans la paroi circulaire fixe (2) permettent d'injecter les fluides, provenant de la chambre d'alimentation (20), le long de cette paroi circulaire fixe (2) dans une direction transversale formant un angle inférieur à 45° avec cette paroi (2), afin de faire tourner les particules solides (6) qui sont alimentées dans la chambre circulaire par un tube (21) et, sous l'effet de la force centrifuge, de les accumuler dans un lit fluidifié rotatif glissant le long de la paroi circulaire fixe (2).

Les particules solides sont ensuite évacuées par le tube d'évacuation (22) et éventuellement recyclées après traitement adéquat. Le niveau du lit fluidifié peut être régulé par la position de ce tube (22), plus ou moins éloignée de la paroi circulaire et donc plus ou moins proche du tube rotatif (7). Il est aussi possible à l'aide de plusieurs tubes d'évacuation (22), positionnés à des distances différentes de la paroi circulaire, de séparer les particules en fonction de leur dimension ou de leur densité, les particules les plus lourdes ou les plus denses se concentrant le long de la paroi circulaire.

La chambre d'alimentation (20) peut être divisée en plusieurs parties séparées par des cloisons annulaires (23) afin de permettre d'alimenter la chambre circulaire par des fluides de compositions différentes et/ou à des températures différentes.

Le tube central rotatif (7), équipé d'ouvertures d'évacuation des fluides (9) et pourvu éventuellement de palettes ou d'ailettes, non montrées sur la figure, est entraîné dans un mouvement de rotation rapide par le moteur (24) par l'intermédiaire d'un arbre de transmission central (25) auquel il est relié par des rayons (28) permettant le passage du ou des fluide et éventuellement un disque (29) qui divise le tube central rotatif en deux parties séparées.

Les fluides, qui tournent rapidement, sont évacués de chaque côté du tube central rotatif par les tubes fixes (30.1) et (30.2), en passant éventuellement au travers de cyclones, (31.1) et (31.2) permettant, grâce à la vitesse de rotation des fluides évacués, de séparer les particules solides qui auraient pu pénétrer dans le tube central rotatif et de les récolter par les tubes (33). Les fluides peuvent ensuite être évacués et/ou recyclés dans la chambre d'alimentation (20) après avoir été traités, par exemple refroidis ou réchauffés et séchés ou purifiés, dans des unités de traitement non montrées sur la figure.

L'arbre de transmission central (25) est maintenu par les roulements à billes (35) fixés contre la paroi du tube fixe (30.1) et au centre du tube fixe (30.2) par l'intermédiaire de rayons (36) qui laissent passer le fluide.

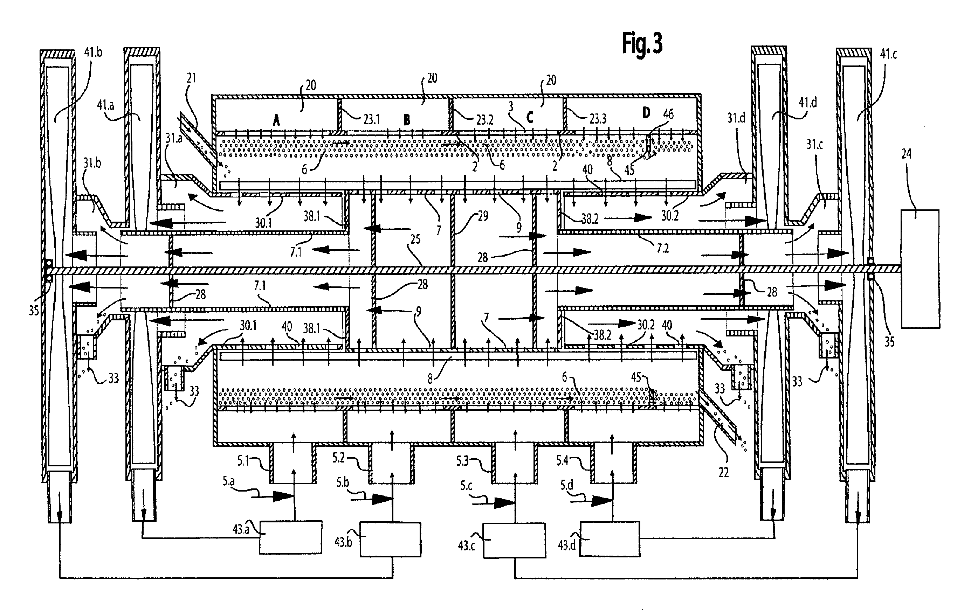

La FIGURE 3 montre la coupe longitudinale d'une variante de l'invention. La chambre d'alimentation de fluides (20) est divisée en 4 sections A, B, C et D par les cloisons annulaires de (23.1) à (23.3) afin de pouvoir alimenter des fluides de compositions et/ou à des températures différentes au travers de la paroi circulaire fixe (2) par les injecteurs de fluides symbolisés par les ouvertures (3).

Le tube central rotatif (7) est pourvu d'ouvertures (9) uniquement dans les zones délimitées par les sections annulaires B et C. Il est prolongé de chaque côté de ces zones par deux tubes rotatifs de plus petit diamètre (7.1) et (7.2) auxquels il est relié par les disques annulaires (38.1) et (38.2) et par où les fluides peuvent être évacués. Il est équipé de plusieurs palettes ou ailettes (8), qui lui sont fixées et qui se prolongent jusqu'à proximité des deux côtés de la chambre circulaire fixe. Elles sont symbolisées par les rectangles (8).

Les fluides injectés transversalement et approximativement tangentiellement le long de la surface circulaire (2) des sections B et C traversent le lit de particules solides fluidifiées (6) en les faisant tourner le long de la surface circulaire (2). La vitesse de rotation des fluides est ensuite accélérée par les palettes (39), avant qu'ils pénètrent dans le tube central rotatif (7) par les ouvertures (9). Ils sont ensuite aspirés respectivement par exemple par des compresseurs centrifuges comprenant une roue à aubes (41.b) et (41.c) en passant au travers des rayons (28) qui relient 1e tube central rotatif (7) à l'arbre de transmission (25) actionné par le moteur (24) qui peut entraîner également les turbines. Les cyclones (31.b) et (31.c) permettent de séparer du fluide les particules solides qui auraient été entraînées par le fluide et de les récolter par les tubes (33).

Les fluides injectés transversalement et approximativement tangentiellement le long de la surface circulaire (2) des sections A et D traversent également le lit de particules solides fluidifiées (6) en les faisant tourner. La vitesse de rotation des fluides est ensuite accélérée par les palettes (8), puis pénètrent par les ouvertures (40) dans les tubes fixes (30.1) et (30.2) entourant les tubes rotatifs (7.1) et (7.2). Ils sont aspirés respectivement par exemple par des compresseurs centrifuges comprenant une roue à aubes (41.a) et (41.d) qui peuvent être entraînées par les tubes rotatifs (7.1) et (7.2). Les ouvertures (40) peuvent être profilées afin de faciliter l'entrée du gaz et de maintenir son mouvement rotatif à l'intérieur des tubes fixes (30.1) et (30.2), afin de permettre la séparation, dans les cyclones (31.a) et (31.d), des fluides et des particules solides, éventuellement entraînées par ces fluides.

Des fluides frais, de (5.a) à (5.d) peuvent être introduits dans les sections de A à D par les tubes d'entrée de (5.1) à (5.4) et les fluides qui ont traversé le lit fluidifié (6) et ont été comprimés par les turbines de (41.a) à (41.d) peuvent être évacués et/ou envoyés dans des unités de traitement de (43.a) à (43.d) et recyclés, soit dans leur section d'origine, de A à D, comme montré sur la figure ou dans une autre section suivant les besoins.

Les particules solides, qui sont alimentées d'un côté de la chambre circulaire (2) par le tube (21) vont remplir progressivement le lit fluidifié (6) et sont ensuite évacuées par le tube (22) situé de l'autre côté. L'épaisseur du lit fluidifié peut être maintenue à un niveau plus ou moins constant à l'aide d'un anneau de régulation (45) disposé contre la paroi circulaire (2) à proximité du tube d'évacuation (22). Cet anneau peut être pourvu d'un ou plusieurs passages (46) permettant aux particules solides les plus grosses ou les plus lourdes, qui ont tendance à se concentrer le long de la paroi annulaire, de passer de l'autre côté de cet anneau de régulation.

L'axe de rotation du lit fluidifié peut être horizontal, incliné ou vertical. Ceci permet d'augmenter la vitesse longitudinale des particules solides et donc de diminuer leur temps de résidence. Si cet axe est fortement incliné ou vertical, l'épaisseur du lit fluidifié est plus grande dans le bas à cause de la pesanteur, ce qui peut limiter la longueur de la chambre circulaire. Dans ce cas il suffit de diviser le lit fluidifié en plusieurs tronçons à l'aide d'anneaux de séparation ou de spires hélicoïdales disposées le long de la paroi circulaire, avec ou sans passages le long de la paroi circulaire pour permettre le passage des particules solides le long de cette paroi.

Ces anneaux ou spires hélicoïdales peuvent être creux et alimentés en fluides injectés dans le sens de la rotation du lit fluidifié le long de la surface de ces anneaux, de préférence du côté supérieur, pour faciliter la rotation des particules solides le long de leur surface. Ils peuvent être également utilisés lorsque l'axe de rotation est horizontal ou légèrement incliné afin de guider les particules solides dans le sens souhaité. Des anneaux de plus petit diamètre peuvent aussi être fixés à la cheminée centrale rotative afin de mieux séparer les flux de fluides provenant de sections différentes.

Si l'injection du ou des fluides qui traversent rapidement le lit fluidifié rotatif est suffisamment uniforme pour minimiser les mélanges longitudinaux des particules solides et si l'épaisseur du lit fluidifié est relativement mince et la longueur de la chambre circulaire relativement grande, les particules solides alimentées d'un côté de la chambre circulaire vont se déplacer relativement uniformément vers l'autre extrémité. La chambre circulaire peut également être divisée en sections qui peuvent avoir des dimensions différentes et qui peuvent être traversés par des fluides de compositions et/ou à des températures et/ou à des débits et vitesses variables.

Ceci peut être particulièrement avantageux dans beaucoup d'applications. Par exemple pour les procédés de polymérisation, les particules catalytiques solides, en polymérisant, grossissent progressivement en passant au travers des sections successives et leur activité catalytique diminue progressivement. Cette évolution de l'activité et de la granulométrie des particules catalytiques peut être compensée en adaptant d'une section à l'autre, la vitesse d'injection, le débit, la température et la composition du fluide qui traverse le lit fluidifié et en augmentant progressivement ou par palier le diamètre de la paroi circulaire (2), afin d'augmenter l'épaisseur et donc le volume et donc le temps de résidence des particules catalytiques et du fluide qui traverse le lit fluidifié. Pour la gazéification de particules solides carbonées (bio masses, charbon, etc), la taille des particules va en diminuant et l'activité liée au rapport masse/surface va en augmentant. Dans ce cas il est possible de diminuer progressivement le diamètre de la chambre circulaire en lui donnant une forme légèrement conique afin de réduire progressivement l'épaisseur du lit fluidifié.

Inversement, si cela est souhaitable, il est possible d'imposer un bon mélange longitudinal des particules solides à l'aide de déflecteurs et/ou d'injecteurs pouvant injecter le fluide dans une direction ayant une composante longitudinale et/ou en augmentant le rapport entre l'épaisseur du lit fluidifié et la longueur de la chambre circulaire.

Il peut être souhaitable, par exemple si le temps de résidence des particules solides dans la chambre de réaction doit être relativement court, d'injecter les particules solides dans la chambre de réaction avec une vitesse relativement élevée, dont la composante longitudinale favorise le mélange des particules solides et la composante tangentielle à la paroi circulaire permet d'obtenir une plus grande vitesse de rotation du lit fluidifié.

Les particules solides peuvent être alimentées d'un côté de la chambre cylindrique fixe et évacuées de l'autre côté avec un temps de résidence moyen de quelques secondes à plusieurs heures suivant les besoins de l'application, par exemple en fonction de la vitesse de polymérisation, et la localisation des tubes d'évacuation des particules solides permet d'évacuer sélectivement les plus grosses (près de la paroi circulaire) et/ou les plus fines (plus près du tube rotatif d'évacuation du gaz) particules solides. L'alimentation et/ou l'évacuation des particules solides peuvent également se faire au travers de la paroi circulaire.

Les particules solides peuvent être, en partie ou en totalité, recyclées dans la chambre circulaire, directement ou après traitement adéquat, par exemple une régénération, et plusieurs chambres circulaires peuvent être mises en série, les particules évacuées d'une chambre circulaire étant alimentées dans la chambre suivante.

De même les fluides peuvent être, en partie ou en totalité, recyclés après traitements adéquats, par exemple séchés, purifiés, refroidis ou réchauffés et si le dispositif d'alimentation et d'évacuation de ces fluides permet de les alimenter séparément dans des sections successives de la chambre circulaire et de les évacuer et de les traiter séparément, ces fluides peuvent être recyclés dans la même section ou dans une autre section en fonction des besoins de l'application.

Le très court temps de résidence du fluide dans le lit fluidifié, les variations rapides et successives de pressions permettant la respiration des particules poreuses, les différences de vitesses entre les particules solides et le fluide, ainsi que les très petites dimensions des particules solides permettent des vitesses de transferts de masse et de calories particulièrement élevées à des températures très stables. Il est particulièrement adapté aux réactions chimiques très rapides et très endothermiques ou exothermiques impliquant des micros particules ou des variations des dimensions ou du poids spécifique des particules solides, mais il permet aussi la classification, le séchage ou l'enrobage rapide de poudres fines qu'il est difficile de fluidifier par les procédés classiques.

Avec un lit fluidifié rotatif classique, supporté par un cylindre poreux rotatif solidaire du tube central d'évacuation du fluide, il est impossible d'obtenir une telle force centrifuge près du tube central d'évacuation du fluide (5.000 fois la pesanteur) sans avoir une force centrifuge encore plus élevée le long de la paroi poreuse supportant le lit de particules, ce qui est trop élevé pour fluidifier le lit avec un flux de gaz traversant le lit de particules solides à une vitesse de 0,4 m/s, sans parler des forces s'exerçant sur le support, des vibrations provoquées par l'agitation des particules solides et de la difficulté d'assurer une alimentation continue des particules solides, nécessairement par le tube central rotatif et de leur évacuation, nécessairement par la chambre d'alimentation du gaz.

Il est également possible, lorsque le fluide principal est un gaz, de pulvériser de fines gouttelettes d'un liquide sur le lit fluidifié au travers du tube fixe (30.1) ou (30.2) ou au travers du tube rotatif (7) en passant le long de l'arbre de transmission (25) et par un ou plusieurs rayons (28) et éventuellement le long d'une ou plusieurs palettes (8). Ceci est particulièrement utile pour le refroidissement, l'imprégnation ou l'enrobage de particules solides ou lorsqu'un des fluides réactifs est de préférence un liquide.

Un liquide peut également être pulvérisé à l'intérieur du tube rotatif, et/ou des tubes fixes, par exemple pour refroidir brutalement le gaz qui vient d'être évacué. Ceci est particulièrement intéressant pour obtenir des produits de réactions intermédiaires nécessitant des temps de résidence du gaz très courts.

Le dispositif selon l'invention est adapté aux procédés de polymérisation catalytique, en ce compris des oléfines, de séchage, d'extraction de composés volatils, d'imprégnation, d'enrobage, de gazéification, de classification et d'autres traitements de particules solides en suspension dans un lit fluidifié rotatif, de transformation catalytique de fluides.

Il est particulièrement adapté à la polymérisation catalytique d'oléfines en phase gazeuse, dans laquelle moins une partie des oléfines est du 1-octène.

Le dispositif selon l'invention est aussi applicable à la déshydrogénation catalytique de l'éthylbenzène pour le transformer en styrène.

Il est également adapté aux procédés qui comprennent des étapes qui consistent à injecter un liquide sur les dites particules solides et à faire réagir chimiquement le dit liquide imprégnant ou entourant les dites particules avec le ou les dits fluides gazeux traversant le dit lit fluidifié rotatif.

Enfin, il trouve des applications dans le domaine agricole, pour le traitement, en particulier le séchage, des grains, de la poudre, et des autres fragments d'origine agricole.

### EXEMPLE D'APPLICATION: fluidisation de micro particules

Des simulations ont montré qu'on peut obtenir un lit fluidifié dense avec des particules de 15 micromètres, du groupe C de la classification de Geldart, grâce à une force centrifuge très élevée, de l'ordre de 50 fois la pesanteur, en le faisant traverser par un fluide de densité comparable à l'air à une vitesse radiale de l'ordre de 0,4 m/s, et que des particules de quelques micromètres peuvent être fluidifiées et former un lit fluidifié dense avec une force centrifuge 10 fois plus élevée.

Dans cet exemple, la chambre de réaction cylindrique a 40 cm de diamètre et 1 m de long. Elle comprend un tube rotatif central d'évacuation de fluide, de 28 cm de diamètre, muni de palettes, tournant à 6.000 tours par minute, permettant d'entraîner le fluide autour du tube rotatif à une vitesse d'environ 85 m/s, générant une force centrifuge de plus de 5.000 fois la pesanteur, suffisante pour empêcher l'entraînement des particules solides, d'un ordre de grandeur d'un micromètre, dans les ouvertures d'évacuation du tube rotatif.

Des injecteurs de gaz, répartis autour de la paroi cylindrique, permettent l'injection de gaz en couches successives dans des directions transversales formant un angle de moins de 45° avec la paroi circulaire. Avec une surface d'injection totale de 1 dm², et une vitesse d'injection du gaz de 100 m/s, ce qui donne un débit de gaz de 1 m³/s, la vitesse radiale moyenne est d'environ 0,4 m/s. Les particules solides sont entraînées dans un mouvement de rotation rapide pouvant générer une force centrifuge de plus de 500 fois la pesanteur, suffisante pour désolidariser les particules solides et pour obtenir un lit fluidifié dense de quelques cm d'épaisseur avec des particules solides de 5 à 10 micromètres.

Ce dispositif permet donc, dans un réacteur de 100 litres environ, de faire traverser par 1.000 litres de gaz par seconde un lit fluidifié rotatif dense d'une cinquantaine de litres de particules solides de quelques microns et le gradient de force centrifuge entre le lit fluidifié et le tube rotatif central permet de fluidifier un mélange de particules solides comprenant des fines de moins d'un micron. Ceci est particulièrement intéressant lorsque la taille des particules solides varie, par exemple en raison de leur combustion partielle pour la fabrication de gaz de synthèse, ou de leur polymérisation ou enrobage progressif.

## Revendications

1. - Dispositif à lit fluidifié rotatif comprenant:
- un dispositif d'alimentation dans une chambre circulaire fixe d'un ou plusieurs fluides, gazeux ou liquides, disposé autour de la paroi circulaire fixe de la dite chambre circulaire et un dispositif permettant d'évacuer centralement le ou les dits fluides,
- un dispositif d'alimentation de particules solides dans la dite chambre circulaire et un dispositif d'évacuation des dites particules solides,
- le dit dispositif d'alimentation du ou des dits fluides comprend des injecteurs de fluide, répartis autour de la dite paroi circulaire, injectant le ou les dits fluides dans des directions formant un angle inférieur à 45° avec les plans tangents à la paroi circulaire, le ou les dits fluides tournant à l'intérieur de la dite chambre circulaire le long de la dite paroi circulaire avant d'être évacués centralement et faisant tourner les dites particules solides alimentées par le dit dispositif d'alimentation, **caractérisé en ce que**:
- le dit dispositif d'évacuation du ou des dits fluides comprend un tube central rotatif traversant ou pénétrant longitudinalement à l'intérieur de la dite chambre circulaire, la dite cheminée centrale tournant dans le même sens et comprenant au moins une ouverture d'évacuation permettant d'évacuer centralement le ou les dits fluides de la dite chambre circulaire, par le dit tube central rotatif.

2. - Dispositif suivant la revendication 1, **caractérisé en ce que** la dite cheminée centrale tourne à une vitesse de rotation supérieure à la vitesse moyenne de rotation du ou des dits fluides.

3. - Dispositif suivant l'une quelconque des revendications 1 ou 2, **caractérisé en ce que** au moins une partie des dits injecteurs de fluide injecte le ou les dits fluides en une succession de couches qui longent la dite paroi circulaire en tournant autour du dit tube central rotatif.

4. - Dispositif suivant l'une quelconque des revendications précédentes, **caractérisé en ce que** les sections transversales de la chambre circulaire sont choisies parmi les cercles, les polygones, et les autres formes de courbures variables.

5. - Dispositif suivant l'une quelconque des revendications précédentes, **caractérisé en ce que** les sections transversales de la chambre circulaire ont une surface choisie parmi une surface fixe, une surface variant progressivement et une surface variant par palier.

6. - Dispositif selon l'une quelconque des revendications précédentes, **caractérisé en ce que** la dite cheminée centrale a une section choisie parmi le cercle, les polygones, et les autres formes de courbures variables.

7. - Dispositif suivant l'une quelconque des revendications précédentes, **caractérisé en ce que** le dit tube central rotatif comprend des palettes, aubes ou ailettes qui entraînent dans un mouvement de rotation la couche de fluide autour du dit tube central rotatif.

8. - Dispositif suivant la revendication 7, **caractérisé en ce que** la vitesse de rotation de la dite couche de fluide produit une force centrifuge supérieure à la force centripète moyenne exercée par le ou les dits fluides sur les dites particules solides, entraînées par le ou les dits fluides et pénétrant à l'intérieur de la dite couche de fluide.

9. - Dispositif suivant l'une quelconque des revendications précédentes, **caractérisé en ce que** le fluide sortant du dit tube central rotatif en tournant rapidement sur lui-même pénètre dans un tube évasé permettant de séparer le dit fluide des particules solides entraînées par le dit fluide à l'intérieur du dit tube central rotatif.

10. - Dispositif suivant l'une quelconque des revendications précédentes, **caractérisé en ce qu'**il comprend un dispositif de recyclage d'au moins une partie du ou des dits fluides évacués par le dit dispositif d'évacuation du ou des dits fluides vers le dit dispositif d'alimentation du ou des dits fluides.

11. - Dispositif suivant la revendication 10, **caractérisé en ce que** le dit dispositif d'évacuation des dits fluides permet d'évacuer séparément les dits fluides provenant de sections annulaires successives de la dite chambre circulaire et **en ce que** le dit dispositif de recyclage des dits fluides permet de traiter et d'alimenter séparément dans les mêmes ou dans d'autres dites sections annulaires successives les dits fluides évacués séparément.

12. - Dispositif suivant la revendication 11, **caractérisé en ce que** le dit dispositif d'évacuation des dits fluides comprenant un dit tube central rotatif muni de dites palettes, aubes ou ailettes comprend également au moins un tube fixe (30) concentrique et extérieur au dit tube rotatif, traversant au moins une dite section annulaire de la dite chambre circulaire et muni d'au moins une ouverture permettant d'évacuer centralement et séparément le ou les dits fluides provenant de la dite section annulaire, les dites palettes ou ailettes fixées sur le dit tube central rotatif étant prolongées pour tourner autour et à l'extérieur d'au moins une partie du dit tube fixe, faisant tourner la couche de fluide entourant le dit tube fixe.

13. - Dispositif suivant l'une quelconque des revendications précédentes, **caractérisé en ce qu'**il comprend au moins un disque annulaire (45) fixé sur le dit tube central rotatif ou aux dites palettes, aubes ou ailettes, permettant de séparer les dits fluides qui traversent le dit lit fluidifié rotatif et pénètrent de chaque côté du disque annulaire dans le dit tube central rotatif ou le dit tube fixe concentrique.

14. - Dispositif suivant l'une quelconque des revendications précédentes, **caractérisé en ce que** le dit dispositif d'évacuation du ou des dits fluides comprend au moins une roue à aubes dont l'axe de rotation est le même que l'axe de rotation du dit tube central rotatif et qui est actionnée par le même dispositif faisant tourner le dit tube central rotatif.

15. - Dispositif suivant l'une quelconque des revendications précédentes, **caractérisé en ce que** le dit dispositif d'alimentation des dites particules solides injecte les dites particules solides d'un côté de la dite chambre circulaire et **en ce que** le dit dispositif d'évacuation des dites particules solides évacue les particules solides de l'autre côté de la dite chambre circulaire, ou **en ce que** le dit dispositif d'alimentation des dites particules solides injecte les dites particules solides dans la partie centrale de la dite chambre circulaire et **en ce que** le dit dispositif d'évacuation des dites particules solides évacue les particules solides aux deux extrémités de la dite chambre circulaire, ou **en ce que** le dit dispositif d'alimentation des dites particules solides injecte les dites particules solides aux deux extrémités de la dite chambre circulaire et **en ce que** le dit dispositif d'évacuation des dites particules solides évacue les particules solides au centre de la dite chambre circulaire.

16. - Dispositif suivant l'une quelconque des revendications précédentes, **caractérisé en ce qu'**il comprend au moins un anneau de régulation fixé le long de la dite paroi circulaire à proximité d'un dispositif d'évacuation des dites particules solides et avant ce dernier dans le sens de circulation des dites particules solides, le diamètre intérieur du dit anneau de régulation étant à une distance de la dite paroi circulaire permettant de maintenir l'épaisseur du lit fluidifié à l'épaisseur souhaitée.

17. - Dispositif suivant l'une quelconque des revendications de 1 à 15, **caractérisé en ce que** le dit dispositif d'évacuation des dites particules solides comprend une ouverture au travers d'un côté de la dite chambre circulaire à une distance de la dite paroi circulaire permettant de maintenir l'épaisseur du lit fluidifié à l'épaisseur souhaitée.

18. - Dispositif suivant l'une quelconque des revendications précédentes, **caractérisé en ce que** le dit dispositif d'évacuation des dites particules solides comprend un tube ayant une ouverture dans la dite paroi circulaire ou contre la dite paroi circulaire.

19. - Dispositif suivant l'une quelconque des revendications précédentes, **caractérisé en ce que** le dit dispositif d'évacuation des dites particules solides comprend un tube ayant une ouverture à une distance de la dite paroi circulaire, de préférence au niveau de la surface souhaitée pour le dit lit fluidifié rotatif.

20. - Dispositif suivant l'une quelconque des revendications précédentes, **caractérisé en ce qu'**il comprend au moins un élément permettant de déplacer longitudinalement les dites particules solides choisi parmi les déflecteurs ou spires ou fractions de spires hélicoïdales fixés le long de la dite paroi circulaire et les injecteurs de fluide permettant d'injecter un fluide dans une direction ayant une composante longitudinale.

21. - Dispositif suivant l'une quelconque des revendications précédentes, **caractérisé en ce que** l'axe de rotation du dit lit fluidifié et du dit tube central rotatif forment un angle inférieur à 45° avec la verticale et **en ce qu'**il comprend un ensemble d'anneaux de séparation qui sont fixés le long de la dite paroi circulaire et dont le diamètre intérieur est inférieur au diamètre souhaité du dit lit fluidifié rotatif.

22. - Dispositif suivant la revendication 21, **caractérisé en ce que** les dits anneaux de séparation sont creux et sont alimentés en fluide par le dit dispositif d'alimentation de fluide, le dit fluide étant injecté dans le sens de rotation du dit lit fluidifié rotatif.

23. - Dispositif suivant l'une quelconque des revendications 16, 21 ou 22, **caractérisé en ce que** le ou les dits anneaux de séparation comprennent au moins un passage situé contre la dite paroi circulaire permettant le passage des dites particules solides situées au-dessus des dits anneaux de séparation vers le bas sans devoir passer par l'espace situé entre les bords intérieurs et le dit tube central rotatif.

24. - Dispositif suivant l'une quelconque des revendications précédentes, **caractérisé en ce qu'**il comprend un dispositif de recyclage des dites particules solides.

25. - Dispositif suivant l'une quelconque des revendications précédentes, **caractérisé en ce qu'**il comprend au moins deux dites chambres circulaires successives, les dites particules solides évacuées d'une des dites chambres circulaires successives étant alimentées dans la suivante.

26. - Dispositif suivant l'une quelconque des revendications précédentes, **caractérisé en ce que** le ou les dits fluides sont des gaz et **en ce qu'**il comprend un dispositif d'injection d'un liquide permettant d'injecter le dit liquide sur au moins une partie de la surface du dit lit fluidifié.

27. - Dispositif suivant l'une quelconque des revendications précédentes, **caractérisé en ce que** le ou les dits fluides sont des gaz et **en ce qu'**il comprend un dispositif permettant de pulvériser un liquide à l'intérieur du dit tube central rotatif ou du dit tube concentrique fixe.

28. - Dispositif suivant l'une quelconque des revendications précédentes, **caractérisé en ce que** la vitesse moyenne de rotation du dit lit fluidifié rotatif génère une force centrifuge d'au moins 10 fois la pesanteur.

29. - Dispositif suivant l'une quelconque des revendications précédentes, **caractérisé en ce que** le dit dispositif d'alimentation du ou des dits fluides comprend des injecteurs de fluides permettant d'injecter des jets de fluide capables de désagréger les particules solides collantes ou soumises à des forces de cohésion et de les empêcher de coller sur les parois de la dite chambre circulaire.

30. - Dispositif suivant l'une quelconque des revendications précédentes, **caractérisé en ce que** le dit dispositif d'alimentation des dites particules solides permet d'injecter les dite particules solides à une vitesse supérieure à la vitesse moyenne des dites particules solides dans le dit lit fluidifié rotatif.

31. - Procédé choisi parmi les procédés de polymérisation catalytique en ce compris des oléfines, de séchage, d'extraction de composés volatils, d'imprégnation, d'enrobage, de gazéification, de classification et d'autres traitements de particules solides en suspension dans un lit fluidifié rotatif, de transformation catalytique de fluides **caractérisé en ce qu'**il utilise le dispositif selon l'une quelconque des revendications précédentes.

32. - Procédé selon la revendication 31, consistant en la polymérisation catalytique d'oléfines en phase gazeuse, **caractérisé en ce qu'**au moins une partie des oléfines est du 1-octène.

33. - Procédé selon la revendication 31, **caractérisé en ce qu'**il comprend les étapes qui consistent à injecter un liquide sur les dites particules solides et à faire réagir chimiquement le dit liquide imprégnant ou entourant les dites particules avec le ou les dits fluides gazeux traversant le dit lit fluidifié rotatif.

34. - Procédé selon la revendication 31, **caractérisé en ce que** le dit fluide ou mélange de fluides contient de l'éthylbenzène et que la dite transformation catalytique implique sa déshydrogénation pour le transformer en styrène.

35. - Procédé selon la revendication 31, **caractérisé en ce** les dites particules solides sont d'origine agricole et choisies parmi les grains, la poudre et les autres fragments.
